# EUROPÄISCHE PATENTANMELDUNG

(11) **EP 4 070 694 A1**
(43) Veröffentlichungstag der Anmeldung: **12.10.2022**
(21) Anmeldenummer: 22163457.9
(22) Anmeldetag: 22.03.2022
(51) Int. Cl.: A47J 27/00, A47J 36/02

(54) **KÜCHENUTENSIL ZUM AUFSTELLEN AUF EIN INDUKTIONSKOCHFELD**

(30) Priorität: 07.04.2021 BE 202105269
(71) Anmelder: Miele & Cie. KG, 33332 Gütersloh (DE)
(72) Erfinder: Ennen, Volker, 32257 Bünde (DE)

(57) **Zusammenfassung**

Die Erfindung betrifft ein Küchenutensil (2) zum Aufstellen auf ein Induktionskochfeld (4), umfassend eine Innenschale (6) mit einem Innenboden (8), eine von der Innenschale (6) durch einen Zwischenraum (14) beabstandete Außenschale (16) mit einem Außenboden (18) und mindestens eine in dem Zwischenraum (14) angeordnete Stützstruktur (24) zur Aufnahme von senkrecht zu einander gegenüberliegenden Oberflächen der Innenschale (6) und der Außenschale (16) wirkenden Kräften, wobei die Stützstruktur (24) mittelbar oder unmittelbar an der Innenschale (6) und an der Außenschale (16) kraftübertragend anliegt, dadurch gekennzeichnet, dass zwischen dem Innenboden (8) und dem Außenboden (18) mit Abstand zu der Außenschale (16) eine induktive Heizvorrichtung (26) wärmeleitend an dem Innenboden (8) angeordnet ist, wobei die induktive Heizvorrichtung (26) in einer Aufstelllage des Küchenutensils (2) auf dem Induktionskochfeld (4) mittelbar und/oder unmittelbar mit einer Induktionsspule des Induktionskochfelds (4) induktiv koppelbar ist.

## Beschreibung

Die Erfindung betrifft ein Küchenutensil zum Aufstellen auf ein Induktionskochfeld der im Oberbegriff des Patentanspruchs 1 genannten Art.

Derartige Küchenutensilien, beispielsweise Kochtöpfe, Bratpfannen oder dergleichen, sind aus dem Stand der Technik in einer Vielzahl von Ausführungsformen bereits vorbekannt. Die bekannten Küchenutensilien umfassen beispielsweise eine Innenschale mit einem Innenboden, eine von der Innenschale durch einen Zwischenraum beabstandete Außenschale mit einem Außenboden und mindestens eine in dem Zwischenraum angeordnete Stützstruktur zur Aufnahme von senkrecht zu einander gegenüberliegenden Oberflächen der Innenschale und der Außenschale wirkenden Kräften, wobei die Stützstruktur an der Innenschale und an der Außenschale kraftübertragend anliegt.

Es sind unterschiedliche Arten von Kochgeschirr bekannt, welche zur Verwendung mit einem Induktionskochfeld vorgesehen sind.

Ein Kochgeschirr zur Verwendung mit einem Induktionskochfeld weist einen Körper mit einem Boden, mit einem Wandbereich und mit einem Übergangsbereich zwischen dem Boden und dem Wandbereich auf, wobei der Boden ausgebildet ist, auf einer Kochstelle des Induktionskochfelds angeordnet und von einer Induktionsspule der Kochstelle induktiv erwärmt zu werden.

Die Druckschrift DE 10 2017 114 943 A1 zeigt ein Küchenutensili, insbesondere einen Kochtopf mit einem mehrlagigen Bodenaufbau, einschließlich einer, insbesondere ersten Schicht aus einem Curie-Material. Der Wandbereich und/oder der Übergangsbereich sind/ist aus einem Material hergestellt, welches eine geringere magnetische Permeabilität als das Material der ersten Schicht des Bodens aufweist. In einer Ausführungsform weist dieses Kochgeschirr insgesamt drei Schichten auf, wobei auf die vorgenannte erste Schicht auf der dem Induktionskochfeld abgewandten Seite der ersten Schicht eine als wärmeleitende Schicht ausgebildete zweite Schicht und auf diese zweite Schicht eine als nicht magnetisierbare Schicht ausgebildete dritte Schicht folgt.

Ausgehend von dem bekannten Stand der Technik stellt sich der Erfindung somit das Problem, ein Küchenutensil zum Aufstellen auf ein Induktionskochfeld zu verbessern.

Erfindungsgemäß wird dieses Problem durch ein Küchenutensil mit den Merkmalen des Patentanspruchs 1 gelöst, dadurch gekennzeichnet, dass zwischen dem Innenboden und dem Außenboden mit Abstand zu der Außenschale eine induktive Heizvorrichtung wärmeleitend an dem Innenboden angeordnet ist, wobei die induktive Heizvorrichtung in einer Aufstelllage des Küchenutensils auf dem Induktionskochfeld mittelbar und/oder unmittelbar mit einer Induktionsspule des Induktionskochfelds induktiv koppelbar ist.

Der Begriff Küchenutensil ist hier von allgemeiner Bedeutung und umfasst neben den vorgenannten Kochtöpfen und Bratpfannen auch andere Gargefäße wie beispielsweise Bräter oder Grillplatten. Ferner umfasst der Begriff Küchenutensil hier jede Art von sinnvollerweise auf ein Induktionskochfeld aufstellbaren Utensilien, bei denen mittels der Induktionsspule des Induktionskochfelds Energie in das jeweilige Utensil eingekoppelt werden soll. Rein exemplarisch seien hier Utensilien mit induktiven Heizelementen, wie beispielsweise Kaffeemaschinen oder Teekocher, und Utensilien mit Antriebsmotoren, wie beispielsweise Mühlen, genannt. Vorteilhafte Ausgestaltungen und Weiterbildungen der Erfindung ergeben sich aus den nachfolgenden Unteransprüchen.

Der mit der Erfindung erreichbare Vorteil besteht insbesondere darin, dass ein Küchenutensil zum Aufstellen auf ein Induktionskochfeld verbessert ist. Aufgrund der erfindungsgemäßen Ausbildung des Küchenutensils ist es möglich, dass die Außenschale des Küchenutensils, insbesondere der Außenboden des Küchenutensils, im Vergleich zu der Innenschale des Küchenutensils auch bei einem Betrieb des Küchenutensils eine deutlich niedrigere Temperatur als die Innenschale des Küchenutensils aufweist. Erfindungsgemäß ist somit ein gedämmtes Küchenutensil auf konstruktiv und fertigungstechnisch einfache Art und Weise realisierbar, ohne, dass dadurch die induktive Kopplung zwischen der Induktionsspule des Induktionskochfelds auf der einen Seite und der induktiven Heizvorrichtung des erfindungsgemäßen Küchenutensils auf der anderen Seite bei auf dem Induktionskochfeld aufgestellten Küchenutensil wesentlich beeinträchtigt wird. Darüber hinaus ist das erfindungsgemäße Küchenutensil auch bei üblichen Induktionskochfeldern einsetzbar, so dass kein spezielles Induktionskochfeld, beispielsweise mit einem auf das erfindungsgemäße Küchenutensil speziell angepassten Schwingkreis, erforderlich ist. Ferner sind mittels der erfindungsgemäßen Ausbildung des Küchenutensils die Lebensdauer eines Generators der Induktionsspule des Induktionskochfelds sowie die Messgenauigkeit einer etwaigen Küchenutensilpositions- und/oder Küchenutensilgrößenbestimmung, trotz gedämmten Küchenutensil, im Wesentlichen nicht negativ beeinflusst. Die Erfindung ist insbesondere bei sogenannten vollintegrierten Kochfeldern mit empfindlichen Arbeitsplatten oder beim Abstellen des Küchenutensils auf empfindliche Oberflächen, wie beispielsweise auf Tischen ohne Untersetzer oder dergleichen, vorteilhaft einsetzbar. Zur Verbesserung der thermischen Dämmung des Küchenutensils kann der Zwischenraum zwischen der Innenschale und der Außenschale zusätzlich zumindest teilweise mit einem thermischen Dämmstoff ausgefüllt sein. Die mindestens eine Stützstruktur ermöglicht es, dass die Außenschale und/oder die Innenschale im Vergleich zu Küchenutensilien ohne Stützstruktur jeweils mit einer geringeren Materialstärke und damit materialsparender ausgebildet sein können, ohne, dass dadurch die mechanische Stabilität des erfindungsgemäßen Küchenutensils in ungewünschter Weise verringert wird. Dies hat den Vorteil, dass sich beispielsweise die im Vergleich zu üblichen Küchenutensilien dünnere Außenschale besser an eine thermische Ausdehnung der Innenschale anpassen kann. Die mindestens eine Stützstruktur kann als eine Stützstruktur ausgebildet sein, die zum einen auf die Innenschale und die Außenschale stabilisierend wirkt und zum anderen ein hohen Volumenanteil an geöffneten und/oder geschlossenen Hohlräumen aufweist. Beispielsweise kann die Stützstruktur als eine Wabenstruktur oder dergleichen ausgebildet sein. Somit ist eine filigrane und damit materialsparende und gewichtsparende Ausbildung der mindestens einen Stützstruktur ermöglicht.

Grundsätzlich ist das erfindungsgemäße Küchenutensil zum Aufstellen auf ein Induktionskochfeld nach Art, Funktionsweise, Material und Dimensionierung in weiten geeigneten Grenzen frei wählbar. Siehe hierzu beispielsweise die diesbezüglichen Ausführungen in der Beschreibungseinleitung.

Eine vorteilhafte Weiterbildung des erfindungsgemäßen Küchenutensils sieht vor, dass die induktive Heizvorrichtung eine mit dem Innenboden wärmeleitend verbundene Wärmeverteilschicht und eine auf der dem Innenboden abgewandten Seite der Wärmeverteilschicht an der Wärmeverteilschicht wärmeleitend angeordnete und zu dem Außenboden beabstandete Wärmeerzeugungsschicht aufweist, und wobei die Wärmeerzeugungsschicht in einer Aufstelllage des Küchenutensils auf dem Induktionskochfeld mittelbar und/oder unmittelbar mit einer Induktionsspule des Induktionskochfelds induktiv koppelbar ist. Beispielsweise ist es denkbar, dass die Wärmeverteilschicht und die Wärmeerzeugungsschicht der induktiven Heizvorrichtung als ein gemeinsames, bevorzugt einstückiges, Bauteil ausgebildet sind. Hierdurch ist die thermische Isolierung des erfindungsgemäßen Küchenutensils zusätzlich verbessert und damit insbesondere eine ungewünschte übermäßige Erwärmung einer unter dem erfindungsgemäßen Küchenutensil befindlichen Aufstellfläche, beispielsweise eines vollintegrierten Induktionskochfelds, wirksam verhindert.

Eine besonders vorteilhafte Weiterbildung des erfindungsgemäßen Küchenutensils sieht vor, dass mindestens eine der mindestens einen Stützstruktur von der Innenschale und/oder der Außenschale separat ausgebildet ist. Auf diese Weise kann diese mindestens eine Stützstruktur unabhängig von der Innenschale und/oder der Außenschale konstruiert und gefertigt werden. Entsprechend ergibt sich für diese mindestens eine Stützstruktur ein wesentlich größeres Spektrum an Gestaltungsmöglichkeiten. Beispielsweise kann diese mindestens eine Stützstruktur im Vergleich zu der Innenschale und/oder Außenschale materialverschieden ausgebildet sein. Auch ist eine Stützstruktur mit dem vorgenannten hohen Volumenanteil an geöffneten und/oder geschlossenen Hohlräumen, beispielsweise eine als Wabenstruktur ausgebildete Stützstruktur, wesentlich leichter oder überhaupt umsetzbar. Gemäß der vorliegenden Weiterbildung lässt sich diese mindestens eine Stützstruktur somit auf eine Vielzahl von voneinander verschiedenen Anforderungen an das erfindungsgemäße Küchenutensil anpassen.

Eine weitere vorteilhafte Weiterbildung des erfindungsgemäßen Küchenutensils sieht vor, dass die Innenschale eine mittels eines Übergangsbereichs der Innenschale an den Innenboden anschließende Innenwand und die Außenschale eine mittels eines Übergangsbereichs der Außenschale an den Außenboden anschließende Außenwand aufweisen, wobei die mindestens eine Stützstruktur zumindest teilweise zwischen der Innenwand und der Außenwand und/oder zwischen dem Übergangsbereich der Innenschale und dem Übergangsbereich der Außenschale und/oder zwischen dem Innenboden und dem Außenboden angeordnet ist. Hierdurch ist es möglich, das erfindungsgemäße Küchenutensil mittels der mindestens einen Stützstruktur je nach den Erfordernissen des Einzelfalls mechanisch zu stabilisieren.

Eine vorteilhafte Weiterbildung der vorgenannten Ausführungsform des erfindungsgemäßen Küchenutensils sieht vor, dass die zumindest teilweise zwischen dem Innenboden und dem Außenboden angeordnete mindestens eine Stützstruktur im Vergleich zu der zumindest teilweise in einem Rest des Zwischenraums angeordneten mindestens einen Stützstruktur mechanisch stabiler ausgebildet ist. Auf diese Weise ist der mechanisch besonders beanspruchte Bodenbereich des erfindungsgemäßen Küchenutensils zusätzlich mechanisch stabilisiert, ohne, dass das Küchenutensil an dem Rest des erfindungsgemäßen Küchenutensils mit einer unnötig mechanisch stabilen Stützstruktur ausgestattet ist.

Eine weitere besonders vorteilhafte Weiterbildung des erfindungsgemäßen Küchenutensils sieht vor, dass der Zwischenraum zwischen der Innenschale und der Außenschale evakuiert ist, bevorzugt, dass die mindestens eine Stützstruktur als eine zu einem Rest des Zwischenraums offene Struktur ausgebildet ist. Hierdurch ist eine thermische Isolierung in dem Zwischenraum des erfindungsgemäßen Küchenutensils ohne das Einbringen eines zusätzlichen thermischen Dämmstoffs in den Zwischenraum ermöglicht. Dies gilt insbesondere für die bevorzugte Ausführungsform dieser Weiterbildung. Entsprechend ist gemäß der vorliegenden Weiterbildung eine gute thermische Isolierung des erfindungsgemäßen Küchenutensils ohne eine ungewünschte Gewichtserhöhung des erfindungsgemäßen Küchenutensils realisierbar.

Eine vorteilhafte Weiterbildung der vorgenannten Weiterbildung des erfindungsgemäßen Küchenutensils sieht vor, dass die Innenschale, die Außenschale und mindestens eine der mindestens einen Stützstruktur derart aufeinander abgestimmt ausgebildet sind, dass diese Stützstruktur im Wesentlichen lediglich mittels des in dem Zwischenraum herrschenden Vakuums kraftübertragend an der Innenschale und der Außenschale mittelbar oder unmittelbar anliegt. Auf diese Weise ist keine zusätzliche Verbindung, beispielsweise eine Klebung, zwischen dieser Stützstruktur auf der einen Seite und der Innenschale und der Außenschale auf der anderen Seite erforderlich. Der in dem Zwischenraum im Vergleich zu dem Umgebungsdruck in der freien Umgebung herrschende Unterdruck sorgt hier für eine funktionssichere Anlage dieser Stützstruktur an der Innenschale und an der Außenschale. Dies ist deshalb ferner von Vorteil, weil beispielsweise ein verwendeter Klebstoff auch immer eine Schwachstelle für ein Küchenutensil, insbesondere bei hohen Temperaturen, darstellt. Darüber hinaus entfällt mit der zusätzlichen Verbindung auch ein zusätzlicher Fertigungsschritt bei der Herstellung des erfindungsgemäßen Küchenutensils. Für die Übertragung der von außen durch den Umgebungsdruck auf die Innen- und Außenhülle wirkende Kraft auf die Stützstruktur ist es vorteilhaft, wenn die Innen- und/oder Außenhülle ganz oder in Teilen flexibel ist. Insbesondere ist eine geringere Wandstärke in Verbindung mit einer erhöhten Flexibilität im Bereich der Wand vorteilhaft.

Eine weitere vorteilhafte Weiterbildung des erfindungsgemäßen Küchenutensils sieht vor, dass zueinander korrespondierende Kontaktflächen der Innenschale und/oder der Außenschale einerseits und mindestens einer der mindestens einen Stützstruktur andererseits zumindest teilweise eine Gleitschicht und/oder ein Gleitelement aufweisen. Hierdurch ist eine Relativbewegung zwischen der Außenschale und der mindestens einen Stützstruktur und/oder zwischen der mindestens einen Stützstruktur und der Innenschale zusätzlich erleichtert, so dass dadurch beispielsweise voneinander verschiedene thermische Ausdehnungskoeffizienten der Außenschale, dieser mindestens einen Stützstruktur und der Innenschale besser kompensierbar sind. Entsprechend sind mechanische Spannungen in dem erfindungsgemäßen Küchenutensil in den technischen Grenzen verringerbar.

Eine weitere besonders vorteilhafte Weiterbildung des erfindungsgemäßen Küchenutensils sieht vor, dass mindestens eine der mindestens einen Stützstruktur gleichzeitig als ein thermisches Dämmelement ausgebildet ist, wobei diese Stützstruktur eine im Vergleich zu der Innenschale und/oder der Außenschale geringere Wärmeleitfähigkeit aufweist. Auf diese Weise ist diese Stützstruktur nicht nur für deren Hauptzweck, nämlich die mechanische Stabilisierung des erfindungsgemäßen Küchenutensils, sondern zusätzlich auch für einen weiteren Zweck, nämlich die thermische Isolierung des erfindungsgemäßen Küchenutensils, einsetzbar.

Eine vorteilhafte Weiterbildung der vorgenannten Ausführungsform des erfindungsgemäßen Küchenutensils sieht vor, dass mindestens eine der gleichzeitig als thermisches Dämmelement ausgebildeten mindestens einen Stützstruktur zwischen dem Innenboden und dem Außenboden angeordnet ist, bevorzugt, dass diese Stützstruktur zumindest teilweise als eine Aerogelplatte ausgebildet ist. Hierdurch ist insbesondere der Bodenbereich des erfindungsgemäßen Küchenutensils zum einen mechanisch stabilisiert und gleichzeitig zusätzlich thermisch isoliert. Dies gilt besonders für die bevorzugte Ausführungsform dieser Weiterbildung.

Eine vorteilhafte Weiterbildung der letztgenannten Ausführungsform des erfindungsgemäßen Küchenutensils sieht vor, dass diese Stützstruktur einen Stützring und eine thermisch isolierende Füllung umfasst, wobei die thermisch isolierende Füllung eine im Vergleich zu dem Stützring geringere Wärmeleitfähigkeit aufweist, und wobei der Stützring die thermisch isolierende Füllung radial nach Außen einschließt, bevorzugt, dass der Stützring an die Übergangsbereiche der Innenschale und der Außenschale angrenzt und/oder zumindest teilweise in den Übergangsbereichen der Innenschale und der Außenschale angeordnet ist. Auf diese Weise ist die mechanische Stabilität des Bodenbereichs des erfindungsgemäßen Küchenutensils weiter verbessert. Dies ist insbesondere deshalb wichtig, da der Bodenbereich des erfindungsgemäßen Küchenutensils, also der Innenboden und der Außenboden, üblicherweise nicht über eine an sich mechanisch stabilisierende Form, wie dies beispielsweise bei einer ringartigen Form der Innenwand und der Außenwand der Fall ist, verfügt. Dies gilt insbesondere für die bevorzugte Ausführungsform dieser Weiterbildung. Alternativ oder zusätzlich zu der Verwendung eines Stützrings kann diese Stützstruktur gerüstartig ausgebildet sein, so dass beispielsweise in einem von dem Stützring radial eingeschlossenen Inneren zusätzlich zu der thermisch isolierenden Füllung sternförmige oder ringförmige Verstärkungen der gerüstartigen Stützstruktur ausgebildet sein können. Wie in der Beschreibungseinleitung bereits genannt, kann diese Stützstruktur auch wabenförmig ausgebildet sein, wobei die Waben bevorzugt zum Rest des Zwischenraums offen ausgebildet sind.

Alternativ oder zusätzlich dazu sieht eine andere vorteilhafte Weiterbildung des erfindungsgemäßen Küchenutensils vor, dass in Bereichen einer höheren mechanischen Beanspruchung der Außenschale die Materialstärke der Außenschale im Vergleich zu einem Rest der Außenschale erhöht ist und/oder zu der Außenschale materialverschiedene Stabilisierungselemente an oder in der Außenschale angeordnet sind. Auf diese Weise ist es möglich, die mechanische Stabilität je nach den Erfordernissen lediglich lokal, also auf den mechanisch höher beanspruchten Bereich der Außenschale begrenzt, zu erhöhen. Entsprechend ist hiermit die mechanische Stabilität bedarfsgerecht gesteigert, ohne, dass dabei das Gesamtgewicht des erfindungsgemäßen Küchenutensils in unnötiger Weise erhöht wird. Die vorgenannten Stabilisierungselemente sind dabei derart ausgebildet und angeordnet, dass diese die mechanische Stabilität der Außenschale im Vergleich zu der Außenschale ohne diese Stabilisierungselemente erhöhen.

Entsprechend sieht eine vorteilhafte Weiterbildung des erfindungsgemäßen Küchenutensils vor, dass eine Materialstärke des Außenbodens und/oder des Übergangsbereichs der Außenschale größer als eine Materialstärke der Außenwand ausgebildet ist. Hierdurch ist die mechanische Stabilität des erfindungsgemäßen Küchenutensils in dem diesbezüglich besonders kritischen Bodenbereich des erfindungsgemäßen Küchenutensils alternativ oder zusätzlich zu den drei letztgenannten Weiterbildungen erhöht, ohne, dass dadurch die Materialstärke der gesamten Außenschale erhöht ist. Entsprechend ist der vorgenannte Zuwachs an mechanischer Stabilität im Bodenbereich des erfindungsgemäßen Küchenutensils mit einer vertretbaren Gewichtszunahme des erfindungsgemäßen Küchenutensils umsetzbar.

Eine weitere besonders vorteilhafte Weiterbildung des erfindungsgemäßen Küchenutensils sieht vor, dass an oder in mindestens einer der mindestens einen Stützstruktur mindestens ein Zusatzbauteil des Küchenutensils angeordnet ist, bevorzugt ein Ferritkörper und/oder ein elektrisches Bauteil aus der nachfolgenden Gruppe: Elektronik zur Steuerung oder Regelung des Küchenutensils, Elektronik zur Aufnahme und/oder Verarbeitung und/oder Übermittlung von Messwerten und/oder Daten und/oder Steuer- und/oder Regelparametern, Sensor zur Erfassung eines Küchenutensilparameters des Küchenutensils, mittels Induktion betriebene Heizeinrichtung zur Erwärmung eines in der Innenschale befindlichen Garguts, Induktionsspule zur Energieversorgung der Elektronik des Küchenutensils, Spule oder Antenne zur Signalübertragung zwischen dem Küchenutensil und dem Induktionskochfeld und/oder zwischen dem Küchenutensil und einem weiteren Gerät. Hierdurch ist diese Stützstruktur zusätzlich als ein Trägerelement für das mindestens eine Zusatzbauteil verwendbar. Entsprechend ist die Anordnung und damit die Befestigung dieses Zusatzbauteils wesentlich vereinfacht. Besonders vorteilhaft handelt es sich bei diesem Zusatzbauteil um einen Ferritkörper, mittels dem beispielsweise im Bodenbereich des erfindungsgemäßen Küchenutensils, also in dem Zwischenraum zwischen Innenboden und Außenboden, eine magnetische Kopplung der induktiven Heizvorrichtung an die Induktionsspule des Induktionskochfelds verbessert ist. Mittels der anderen besonders vorteilhaften Ausführungsform dieser Weiterbildung, nämlich, dass das mindestens eine Zusatzbauteil als ein elektrisches Bauteil ausgebildet ist, ist es beispielsweise möglich, einen als Temperatursensor ausgebildeten Sensor zur Erfassung einer Temperatur des erfindungsgemäßen Küchenutensils und/oder zur Ermittlung einer Temperatur eines in dem erfindungsgemäßen Küchenuntensil befindlichen Garguts oder dergleichen mittels dieser Stützstruktur zwischen dieser Stützstruktur und der Innenschale einzuklemmen und somit einen sehr guten wärmeleitenden Kontakt zwischen diesem Sensor und der Innenschale auf konstruktiv und fertigungstechnisch besonders einfache Art und Weise zu realisieren. Anstelle eines als Temperatursensor ausgebildeten Sensors sind alternativ oder zusätzlich auch andere Sensoren, beispielsweise ein Vibrationssensor zur Erfassung einer Vibration der Innenschale, denkbar. Selbstverständlich ist die vorgenannte Spule oder Antenne zur Signalübertragung zwischen dem erfindungsgemäßen Küchenutensil und dem Induktionskochfeld auch zur Signalübertragung zwischen dem erfindungsgemäßen Küchenutensil und einem Drittgerät, beispielsweise einem Smartphone oder einem Server, also einer sogenannten Cloud, geeignet und nutzbar. Das zusätzliche Bauteil kann ferner auch als eine vollständige Elektronik des erfindungsgemäßen Küchenutensils ausgebildet sein. Jedoch sind auch Ausführungsformen möglich, bei denen die Elektronik des erfindungsgemäßen Küchenutensils beispielsweise zum einen an oder in einem Griff des erfindungsgemäßen Küchenutensils und zum anderen an oder in der vorgenannten Stützstruktur angeordnet ist.

Ferner sieht eine andere vorteilhafte Weiterbildung des erfindungsgemäßen Küchenutensils vor, dass die Außenschale aus einem Material mit einer im Vergleich zu einem ferromagnetischen Material geringeren Leitfähigkeit für Wirbelströme ausgebildet ist. Auf diese Weise ist eine ungewünschte induktive Erwärmung der Außenschale wirksam verhindert. Die Außenschale kann dabei beispielsweise aus Kunststoff, Carbonfaser, einem Kompositwerkstoff, wie Glasfaser-Komposit, Carbonfaser-Komposit oder Basaltfaser-Komposit, ausgebildet sein.

Vier Ausführungsbeispiele der Erfindung sind in den Zeichnungen rein schematisch dargestellt und werden nachfolgend näher beschrieben. Es zeigt
- Figur 1: ein erstes Ausführungsbeispiel des erfindungsgemäßen Küchenutensils in einer geschnittenen Seitenansicht,
- Figur 2: ein zweites Ausführungsbeispiel des erfindungsgemäßen Küchenutensils in einer geschnittenen Seitenansicht,
- Figur 3: ein drittes Ausführungsbeispiel des erfindungsgemäßen Küchenutensils in einer geschnittenen Seitenansicht und
- Figur 4: ein viertes Ausführungsbeispiel des erfindungsgemäßen Küchenutensils in einer geschnittenen Seitenansicht.

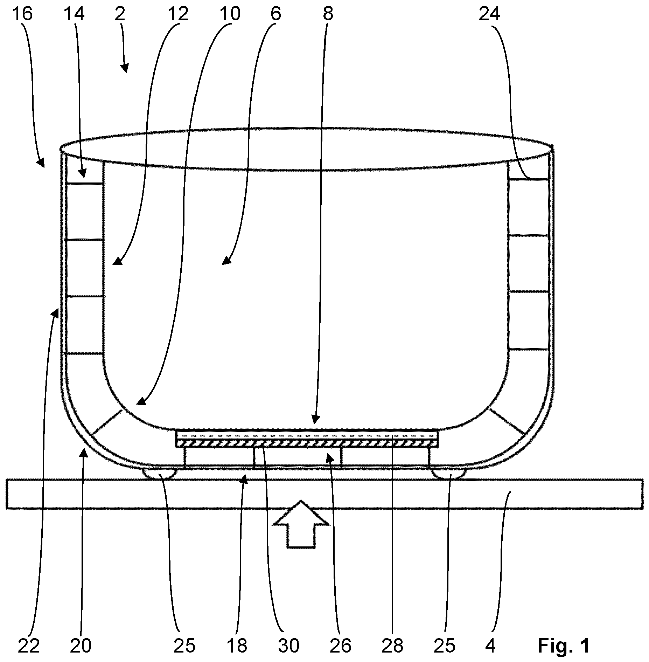

In der Fig. 1 ist ein erstes Ausführungsbeispiel des erfindungsgemäßen Küchenutensils rein exemplarisch dargestellt.

Das Küchenutensil 2 zum Aufstellen auf ein Induktionskochfeld 4 ist hier als ein Kochtopf ausgebildet und umfasst eine Innenschale 6 aus Edelstahl mit einem Innenboden 8, sowie eine mittels eines Übergangsbereichs 10 der Innenschale 6 an den Innenboden 8 anschließende Innenwand 12. Ferner weist das Küchenutensil 2 eine von der Innenschale 6 durch einen Zwischenraum 14 beabstandete Außenschale 16 mit einem Außenboden 18, sowie eine mittels eines Übergangsbereichs 20 der Außenschale 16 an den Außenboden 18 anschließende Außenwand 22 auf. Eine in dem Zwischenraum 14 angeordnete, separate Stützstruktur 24 ist zur Aufnahme von senkrecht zu einander gegenüberliegenden Oberflächen der Innenschale 6 und der Außenschale 16 wirkenden Kräften ausgebildet, wobei die aus Kunststoff hergestellte Stützstruktur 24 an der Innenschale 6 und an der Außenschale 16 kraftübertragend anliegt. Wie aus der Fig. 1 ersichtlich ist, ist die mindestens eine Stützstruktur 24 zwischen der Innenwand 12 und der Außenwand 22 und zwischen dem Übergangsbereich 10 der Innenschale 6 und dem Übergangsbereich 20 der Außenschale 16 und zwischen dem Innenboden 8 und dem Außenboden 18 angeordnet. Die Stützstruktur 24 ist bei dem vorliegenden Ausführungsbeispiel von der Innenschale 6 und der Außenschale 16 separat ausgebildet. Denkbar wäre auch, dass die Stützstruktur in anderen Ausführungsformen der Erfindung beispielsweise einseitig an der Außenschale angeordnet oder ausgebildet ist. An der Außenschale 16, nämlich an dem Außenboden 18, sind bei dem vorliegenden Ausführungsbeispiel zusätzlich insgesamt vier Abstandhalter 25 derart angeordnet oder ausgebildet, dass diese Abstandhalter 25, von denen in der Fig. 1 lediglich zwei sichtbar sind, bei auf dem Induktionskochfeld 4 aufgestellten Küchenutensil 2 einen Luftspalt zwischen der Außenschale 16 des Küchenutensils 2 und dem Induktionskochfeld 4 ausbilden. Hierdurch ist eine Wärmeleitung zwischen dem Küchenutensil 2 und dem Induktionskochfeld 4, beziehungsweise einem anderen Aufstellort des Küchenutensils 2, wirksam verringert.

Zwischen dem Innenboden 8 und dem Außenboden 18 ist mit Abstand zu der Außenschale 16 eine induktive Heizvorrichtung 26 wärmeleitend an dem Innenboden 8 angeordnet, wobei die induktive Heizvorrichtung 26 in einer in der Fig. 1 dargestellten Aufstelllage des Küchenutensils 2 auf dem Induktionskochfeld 4 mittelbar und/oder unmittelbar mit einer nicht dargestellten Induktionsspule des Induktionskochfelds 4 induktiv koppelbar ist. Hierfür weist die induktive Heizvorrichtung 26 eine mit dem Innenboden 8 wärmeleitend verbundene Wärmeverteilschicht 28 und eine auf der dem Innenboden 8 abgewandten Seite der Wärmeverteilschicht 28 an der Wärmeverteilschicht 28 wärmeleitend angeordnete und zu dem Außenboden 18 beabstandete Wärmeerzeugungsschicht 30 auf, wobei die Wärmeerzeugungsschicht 30 in der Aufstelllage des Küchenutensils 2 auf dem Induktionskochfeld 4 mittelbar und/oder unmittelbar mit der Induktionsspule des Induktionskochfelds 4 induktiv koppelbar ist. Die zwischen dem Innenboden 8 und dem Außenboden 18 angeordnete Stützstruktur 24 liegt somit mittelbar, nämlich mittels der induktiven Heizvorrichtung 26, kraftübertragend an dem Innenboden 8 an.

Der Zwischenraum 14 zwischen der Innenschale 6 und der Außenschale 16 ist evakuiert, wobei die Stützstruktur 24 als eine zu einem Rest des Zwischenraums 14 offene Struktur ausgebildet ist. In dem vorliegenden Ausführungsbeispiel ist die Stützstruktur 24 wabenartig ausgebildet. Jedoch sind auch andere für den jeweiligen Einzelfall geeignete Stützstrukturen denkbar. Aufgrund der Evakuierung des Zwischenraums 14, also des in dem Zwischenraum 14 herrschenden Vakuums, ist eine thermische Isolierung in dem Zwischenraum 14 des Küchenutensils 2 ohne das Einbringen eines zusätzlichen thermischen Dämmstoffs in den Zwischenraum 14 ermöglicht. Entsprechend ist eine gute thermische Isolierung des Küchenutensils 2 ohne eine ungewünschte Gewichtserhöhung realisierbar. Bei dem vorliegenden Ausführungsbeispiel sind die Innenschale 6, die Außenschale 16 und die Stützstruktur 24 derart aufeinander abgestimmt ausgebildet, dass diese Stützstruktur 24 im Wesentlichen lediglich mittels des in dem Zwischenraum 14 herrschenden Vakuums mittelbar oder unmittelbar kraftübertragend an der Innenschale 6 und der Außenschale 16 anliegt. Der in dem Zwischenraum 14 im Vergleich zu dem Umgebungsdruck in der freien Umgebung herrschende Unterdruck, sorgt hier für eine funktionssichere Anlage dieser Stützstruktur 24 an der Innenschale 6 und an der Außenschale 16. Um mechanische Spannungen durch voneinander verschiedene thermische Ausdehnungskoeffizienten der Innenschale 6, der Stützstruktur 24 und der Außenschale 16 zusätzlich zu verringern, weisen zueinander korrespondierende Kontaktflächen der Innenschale 6 und der Außenschale 16 einerseits und der Stützstruktur 24 andererseits zumindest teilweise eine Gleitschicht und/oder ein Gleitelement auf. Die Gleitschicht und/oder das Gleitelement sind nicht dargestellt. Beispielsweise können hierfür Gleitbeschichtungen oder als Teflonelemente ausgebildete Gleitelemente verwendet werden.

Aufgrund der Ausbildung der Stützstruktur 24 aus Kunststoff ist die Stützstruktur 24 des vorliegenden Ausführungsbeispiels gleichzeitig als ein thermisches Dämmelement ausgebildet, wobei diese Stützstruktur 24 eine im Vergleich zu der aus Edelstahl ausgebildeten Innenschale 6 geringere Wärmeleitfähigkeit aufweist. Die Außenschale 16 ist hier ebenfalls aus einem Kunststoff ausgebildet und damit aus einem Material mit einer im Vergleich zu einem ferromagnetischen Material geringeren Leitfähigkeit für Wirbelströme.

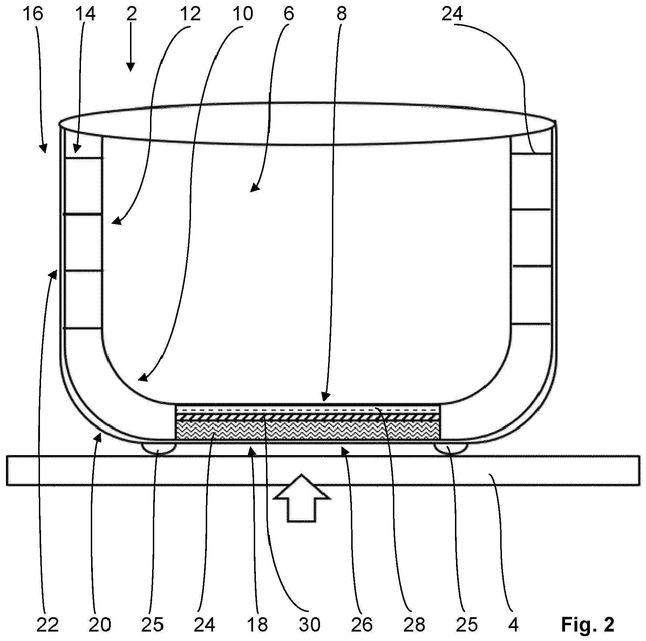

In den Fig. 2 bis 4 sind drei weitere Ausführungsbeispiele des erfindungsgemäßen Küchenutensils dargestellt. Diese Ausführungsbeispiele werden nachfolgend lediglich im Umfang der Unterschiede zu den jeweils vorangegangenen Ausführungsbeispielen erläutert. Ansonsten wird auf die vorherigen Ausführungen, insbesondere auf die Ausführungen zu dem oben erläuterten ersten Ausführungsbeispiel, verwiesen. Gleiche oder gleichwirkende Bauteile sind in den Fig. 1 bis 4 mit den gleichen Bezugszeichen versehen.

In der Fig. 2 ist ein zweites Ausführungsbeispiel des erfindungsgemäßen Küchenutensils dargestellt. Im Unterschied zu dem ersten Ausführungsbeispiel gemäß der Fig. 1 unterscheidet sich hier die Stützstruktur 24 in dem Wandbereich des Küchenutensils 2, also in dem Zwischenraum 14 zwischen der Innenwand 12 und der Außenwand 22, von der Stützstruktur 24 in dem Bodenbereich des Küchenutensils 2, also in dem Zwischenraum 14 zwischen dem Innenboden 8 und dem Außenboden 18. Die zwischen dem Innenboden 8 und dem Außenboden 18 angeordnete Stützstruktur 24 ist hier im Vergleich zu der in dem Rest des Zwischenraums 14 angeordneten Stützstruktur 24 mechanisch stabiler ausgebildet. Auf diese Weise ist der mechanisch besonders beanspruchte Bodenbereich des Küchenutensils 2 zusätzlich mechanisch stabilisiert, ohne, dass das Küchenutensil 2 an dem Rest des Küchenutensils 2 mit einer unnötig mechanisch stabilen Stützstruktur 24 ausgestattet ist. Hierfür ist die mindestens eine Stützstruktur 24 bei dem vorliegenden Ausführungsbeispiel als eine Mehrzahl von Stützstrukturen 24 ausgebildet. Analog zu dem ersten Ausführungsbeispiel ist die zwischen dem Innenboden 8 und dem Außenboden 18 angeordnete Stützstruktur 24 ebenfalls gleichzeitig als ein thermisches Dämmelement ausgebildet, nämlich dahingehend, dass diese Stützstruktur 24 wiederum eine im Vergleich zu der Innenschale 6 geringere Wärmeleitfähigkeit aufweist. Die vorgenannte Stützstruktur 24, die zwischen dem Innenboden 8 und dem Außenboden 18 angeordnet ist, ist bei diesem Ausführungsbeispiel als eine Aerogelplatte ausgebildet. Ansonsten entspricht das zweite Ausführungsbeispiel dem ersten Ausführungsbeispiel, so dass auf die obigen Ausführungen zu dem ersten Ausführungsbeispiel verwiesen werden kann.

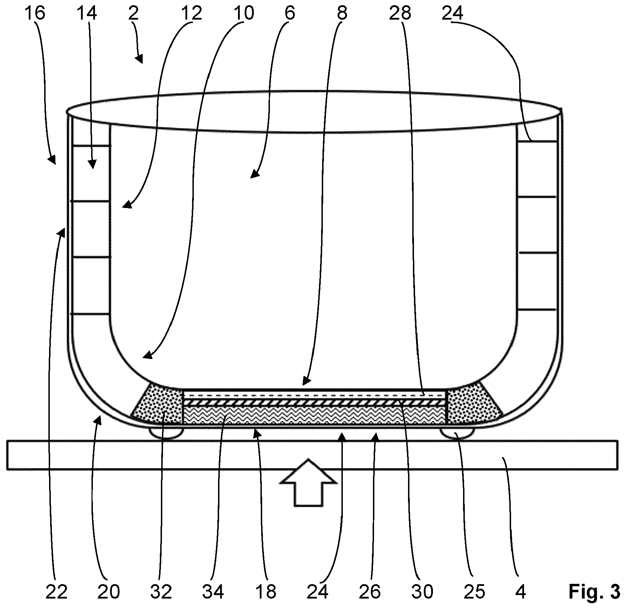

In der Fig. 3 ist ein drittes Ausführungsbeispiel des erfindungsgemäßen Küchenutensils dargestellt. Im Unterschied zu dem zweiten Ausführungsbeispiel gemäß der Fig. 2 weist die zwischen dem Innenboden 8 und dem Außenboden 18 angeordnete Stützstruktur 24 einen Stützring 32 und eine thermisch isolierende Füllung 34 auf, wobei die thermisch isolierende Füllung 34 eine im Vergleich zu dem Stützring 32 geringere Wärmeleitfähigkeit aufweist, und wobei der Stützring 32 die thermisch isolierende Füllung 34 radial nach Außen einschließt, nämlich derart, dass der Stützring 32 an die Übergangsbereiche 10, 20 der Innenschale 6 und der Außenschale 16 angrenzt und in den Übergangsbereichen 10, 20 der Innenschale 6 und der Außenschale 16 zumindest teilweise angeordnet ist. Siehe hierzu die Fig. 3. Aufgrund des mechanisch stabilen Stützrings 32 wäre es nun möglich, dass die thermisch isolierende Füllung lediglich als Dämmstoff ausgebildet ist, also keine mechanisch stabilisierende Wirkung auf den Innenboden und den Außenboden ausübt. Bei dem vorliegenden Ausführungsbeispiel ist es jedoch so, dass die thermisch isolierende Füllung 34, analog zu der Stützstruktur 24 des zweiten Ausführungsbeispiels, als Aerogelplatte ausgebildet ist. Entsprechend werden der Innenboden 8 auf der einen Seite und der Außenboden 18 auf der anderen Seite nicht nur mittels des Stützrings 32, sondern auch mittels der thermisch isolierenden Füllung 34 mechanisch stabilisiert. Ansonsten entspricht das dritte Ausführungsbeispiel dem zweiten Ausführungsbeispiel, so dass auf die obigen Ausführungen zu dem ersten und dem zweiten Ausführungsbeispiel verwiesen werden kann.

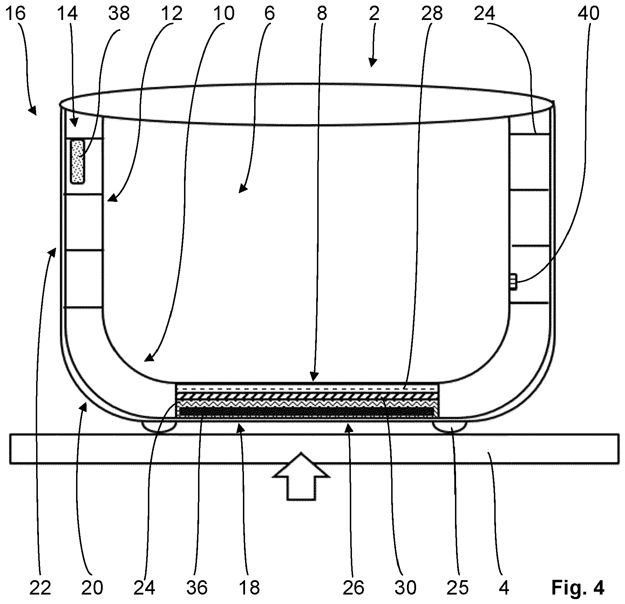

In der Fig. 4 ist ein viertes Ausführungsbeispiel des erfindungsgemäßen Küchenutensils dargestellt. Im Unterschied zu dem zweiten Ausführungsbeispiel gemäß der Fig. 2 ist an oder in der als Aerogelplatte ausgebildeten Stützstruktur 24 zwischen dem Innenboden 8 und dem Außenboden 18 ein als Induktionsspule 36 zur Energieversorgung einer Elektronik 38 des Küchenutensils 2 ausgebildetes Zusatzbauteil des Küchenutensils 2 angeordnet. Die Elektronik 38 des Küchenutensils 2 ist an oder in der zwischen der Innenwand 12 und der Außenwand 22 angeordneten Stützstruktur 24 angeordnet und stromübertragend, beispielsweise stromleitend, mit der Induktionsspule 36 verbunden. Diese Stromübertragungsverbindung ist in der Fig. 4 nicht dargestellt. Die Elektronik 38 des Küchenutensils 2 weist ebenfalls nicht dargestellte Spulen oder Antennen zur Signalübertragung zwischen dem Küchenutensil 2 und dem Induktionskochfeld 4 auf. Ferner ist an oder in der zwischen der Innenwand 12 und der Außenwand 22 angeordneten Stützstruktur 24 ein als Temperatursensor 40 ausgebildeter Sensor des Küchenutensils 2 zur Erfassung einer Temperatur der Innenschale 6 des Küchenutensils 2 angeordnet. Der Temperatursensor 40 ist zur Erfassung einer Temperatur des Küchenutensils 2 und zur Ermittlung einer Temperatur eines in dem Küchenutensil 2 befindlichen, nicht dargestellten Garguts mittels dieser Stützstruktur 24 zwischen dieser Stützstruktur 24 und der Innenschale 6 einklemmbar, so dass ein sehr guter wärmeleitender Kontakt zwischen diesem Temperatursensor 40 und der Innenschale 6 auf konstruktiv und fertigungstechnisch besonders einfache Art und Weise realisiert ist. Der Temperatursensor 40 ist mit der Elektronik 38 des Küchenutensils 2 signalübertragend verbunden. Diese Signalübertragungsverbindung ist in der Fig. 4 nicht dargestellt.

Aufgrund der erfindungsgemäßen Ausbildung des Küchenutensils 2 ist es somit möglich, dass die Außenschale 16 des Küchenutensils 2, insbesondere der Außenboden 18 des Küchenutensils 2, im Vergleich zu der Innenschale 6 des Küchenutensils 2 auch bei einem Betrieb des Küchenutensils 2 eine deutlich niedrigere Temperatur als die Innenschale 6 des Küchenutensils 2 aufweist. Erfindungsgemäß ist somit ein gedämmtes Küchenutensil auf konstruktiv und fertigungstechnisch einfache Art und Weise realisierbar, ohne, dass dadurch die induktive Kopplung zwischen der Induktionsspule des Induktionskochfelds 4 auf der einen Seite und der induktiven Heizvorrichtung 26 des Küchenutensils 2 auf der anderen Seite bei auf dem Induktionskochfeld 4 aufgestellten Küchenutensil 2 wesentlich beeinträchtigt wird. Darüber hinaus ist das Küchenutensil 2 auch bei üblichen Induktionskochfeldern 4 einsetzbar, so dass kein spezielles Induktionskochfeld, beispielsweise mit einem auf das Küchenutensil 2 speziell angepassten Schwingkreis, erforderlich ist. Ferner sind mittels der erfindungsgemäßen Ausbildung des Küchenutensils 2 die Lebensdauer eines nicht dargestellten Generators der ebenfalls nicht dargestellten Induktionsspule des Induktionskochfelds 4 sowie die Messgenauigkeit einer etwaigen Küchenutensilpositions- und/oder Küchenutensilgrößenbestimmung, trotz gedämmten Küchenutensil 2, im Wesentlichen nicht negativ beeinflusst. Die Erfindung ist insbesondere bei sogenannten vollintegrierten Kochfeldern mit empfindlichen Arbeitsplatten oder beim Abstellen des Küchenutensils auf empfindliche Oberflächen, wie beispielsweise auf Tischen ohne Untersetzer oder dergleichen, vorteilhaft einsetzbar. Die mindestens eine Stützstruktur 24 ermöglicht es, dass die Außenschale 16 und/oder die Innenschale 6 im Vergleich zu Küchenutensilien ohne Stützstruktur jeweils mit einer geringeren Materialstärke und damit materialsparender ausgebildet sein können, ohne, dass dadurch die mechanische Stabilität des Küchenutensils 2 in ungewünschter Weise verringert wird. Dies hat den Vorteil, dass sich beispielsweise die im Vergleich zu üblichen Küchenutensilien dünnere Außenschale 16 besser an eine thermische Ausdehnung der Innenschale 6 anpassen kann. Die mindestens eine Stützstruktur 24 ist bei den vorliegenden Ausführungsbeispielen als eine Stützstruktur ausgebildet, die zum einen auf die Innenschale 6 und die Außenschale 16 stabilisierend wirkt und zum anderen ein hohen Volumenanteil an zu dem Rest des Zwischenraums 14 geöffneten Hohlräumen aufweist. Die Stützstruktur 24 ist hierzu beispielsweise als die Wabenstruktur der Ausführungsbeispiele ausgebildet. Somit ist eine filigrane und damit materialsparende und gewichtsparende Ausbildung der mindestens einen Stützstruktur 24 ermöglicht.

Die Erfindung ist nicht auf die vorliegenden Ausführungsbeispiele beschränkt. Siehe hierzu beispielsweise die diesbezüglichen Ausführungen in der Beschreibungseinleitung.

Insbesondere ist das erfindungsgemäße Küchenutensil nicht auf die konstruktiven und fertigungstechnischen Details der Ausführungsbeispiele begrenzt.

Im Unterschied zu den erläuterten Ausführungsbeispielen ist es ferner denkbar, dass in Bereichen einer höheren mechanischen Beanspruchung der Außenschale die Materialstärke der Außenschale im Vergleich zu einem Rest der Außenschale erhöht ist und/oder zu der Außenschale materialverschiedene Stabilisierungselemente an oder in der Außenschale angeordnet sind. Auf diese Weise ist es möglich, die mechanische Stabilität je nach den Erfordernissen lediglich lokal, also auf den mechanisch höher beanspruchten Bereich der Außenschale begrenzt, zu erhöhen. Entsprechend ist hiermit die mechanische Stabilität bedarfsgerecht gesteigert, ohne, dass dabei das Gesamtgewicht des erfindungsgemäßen Küchenutensils in unnötiger Weise erhöht wird. Die vorgenannten Stabilisierungselemente sind dabei derart ausgebildet und angeordnet, dass diese die mechanische Stabilität der Außenschale im Vergleich zu der Außenschale ohne diese Stabilisierungselemente erhöhen.

Beispielsweise ist es möglich, dass eine Materialstärke des Außenbodens und/oder des Übergangsbereichs der Außenschale größer als eine Materialstärke der Außenwand ausgebildet ist. Hierdurch ist die mechanische Stabilität des erfindungsgemäßen Küchenutensils in dem diesbezüglich besonders kritischen Bodenbereich des erfindungsgemäßen Küchenutensils alternativ oder zusätzlich zu den diesbezüglichen Maßnahmen der erläuterten Ausführungsbeispiele oder der vorgenannten Weiterbildung erhöht, ohne, dass dadurch die Materialstärke der gesamten Außenschale erhöht ist. Entsprechend ist der vorgenannte Zuwachs an mechanischer Stabilität im Bodenbereich des erfindungsgemäßen Küchenutensils mit einer vertretbaren Gewichtszunahme des erfindungsgemäßen Küchenutensils umsetzbar.

## Patentansprüche

1. Küchenutensil (2) zum Aufstellen auf ein Induktionskochfeld (4), umfassend eine Innenschale (6) mit einem Innenboden (8), eine von der Innenschale (6) durch einen Zwischenraum (14) beabstandete Außenschale (16) mit einem Außenboden (18) und mindestens eine in dem Zwischenraum (14) angeordnete Stützstruktur (24) zur Aufnahme von senkrecht zu einander gegenüberliegenden Oberflächen der Innenschale (6) und der Außenschale (16) wirkenden Kräften, wobei die Stützstruktur (24) mittelbar oder unmittelbar an der Innenschale (6) und an der Außenschale (16) kraftübertragend anliegt, **dadurch gekennzeichnet, dass** zwischen dem Innenboden (8) und dem Außenboden (18) mit Abstand zu der Außenschale (16) eine induktive Heizvorrichtung (26) wärmeleitend an dem Innenboden (8) angeordnet ist, wobei die induktive Heizvorrichtung (26) in einer Aufstelllage des Küchenutensils (2) auf dem Induktionskochfeld (4) mittelbar und/oder unmittelbar mit einer Induktionsspule des Induktionskochfelds (4) induktiv koppelbar ist.

2. Küchenutensil (2) nach Anspruch 1, **dadurch gekennzeichnet, dass** die induktive Heizvorrichtung (26) eine mit dem Innenboden (8) wärmeleitend verbundene Wärmeverteilschicht (28) und eine auf der dem Innenboden (8) abgewandten Seite der Wärmeverteilschicht (28) an der Wärmeverteilschicht (28) wärmeleitend angeordnete und zu dem Außenboden (18) beabstandete Wärmeerzeugungsschicht (30) aufweist, und wobei die Wärmeerzeugungsschicht (30) in einer Aufstelllage des Küchenutensils (2) auf dem Induktionskochfeld (4) mittelbar und/oder unmittelbar mit einer Induktionsspule des Induktionskochfelds (4) induktiv koppelbar ist.

3. Küchenutensil (2) nach Anspruch 1 oder 2, **dadurch gekennzeichnet, dass** mindestens eine der mindestens einen Stützstruktur (24) von der Innenschale (6) und/oder der Außenschale (16) separat ausgebildet ist.

4. Küchenutensil (2) nach einem der Ansprüche 1 bis 3, **dadurch gekennzeichnet, dass** die Innenschale (6) eine mittels eines Übergangsbereichs (10) der Innenschale (6) an den Innenboden (8) anschließende Innenwand (12) und die Außenschale (16) eine mittels eines Übergangsbereichs (20) der Außenschale (16) an den Außenboden (18) anschließende Außenwand (22) aufweisen, wobei die mindestens eine Stützstruktur (24) zumindest teilweise zwischen der Innenwand (12) und der Außenwand (22) und/oder zwischen dem Übergangsbereich (10) der Innenschale (6) und dem Übergangsbereich (20) der Außenschale (16) und/oder zwischen dem Innenboden (8) und dem Außenboden (18) angeordnet ist.

5. Küchenutensil (2) nach Anspruch 4, **dadurch gekennzeichnet, dass** die zumindest teilweise zwischen dem Innenboden (8) und dem Außenboden (18) angeordnete mindestens eine Stützstruktur (24) im Vergleich zu der zumindest teilweise in einem Rest des Zwischenraums (14) angeordneten mindestens einen Stützstruktur (24) mechanisch stabiler ausgebildet ist.

6. Küchenutensil (2) nach einem der Ansprüche 1 bis 5, **dadurch gekennzeichnet, dass** der Zwischenraum (14) zwischen der Innenschale (6) und der Außenschale (16) evakuiert ist, bevorzugt, dass die mindestens eine Stützstruktur (24) als eine zu einem Rest des Zwischenraums (14) offene Struktur ausgebildet ist.

7. Küchenutensil (2) nach Anspruch 6, **dadurch gekennzeichnet, dass** die Innenschale (6), die Außenschale (16) und mindestens eine der mindestens einen Stützstruktur (24) derart aufeinander abgestimmt ausgebildet sind, dass diese Stützstruktur (24) im Wesentlichen lediglich mittels des in dem Zwischenraum (14) herrschenden Vakuums kraftübertragend an der Innenschale (6) und der Außenschale (16), mittelbar oder unmittelbar, anliegt.

8. Küchenutensil (2) nach einem der Ansprüche 1 bis 7, **dadurch gekennzeichnet, dass** zueinander korrespondierende Kontaktflächen der Innenschale (6) und/oder der Außenschale (16) einerseits und mindestens einer der mindestens einen Stützstruktur (24) andererseits zumindest teilweise eine Gleitschicht und/oder ein Gleitelement aufweisen.

9. Küchenutensil (2) nach einem der Ansprüche 1 bis 8, **dadurch gekennzeichnet, dass** mindestens eine der mindestens einen Stützstruktur (24) gleichzeitig als ein thermisches Dämmelement ausgebildet ist, wobei diese Stützstruktur (24) eine im Vergleich zu der Innenschale (6) und/oder der Außenschale geringere Wärmeleitfähigkeit aufweist.

10. Küchenutensil (2) nach Anspruch 9, **dadurch gekennzeichnet, dass** mindestens eine der gleichzeitig als thermisches Dämmelement ausgebildeten mindestens einen Stützstruktur (24) zwischen dem Innenboden (8) und dem Außenboden (18) angeordnet ist, bevorzugt, dass diese Stützstruktur (24) zumindest teilweise als eine Aerogelplatte ausgebildet ist.

11. Küchenutensil (2) nach Anspruch 10, **dadurch gekennzeichnet, dass** diese Stützstruktur (24) einen Stützring (32) und eine thermisch isolierende Füllung (34) umfasst, wobei die thermisch isolierende Füllung (34) eine im Vergleich zu dem Stützring (32) geringere Wärmeleitfähigkeit aufweist, und wobei der Stützring (32) die thermisch isolierende Füllung (34) radial nach Außen einschließt, bevorzugt, dass der Stützring (32) an die Übergangsbereiche (10, 20) der Innenschale (6) und der Außenschale (16) angrenzt und/oder zumindest teilweise in den Übergangsbereichen (10, 20) der Innenschale (6) und der Außenschale (16) angeordnet ist.

12. Küchenutensil nach einem der Ansprüche 1 bis 11, **dadurch gekennzeichnet, dass** in Bereichen einer höheren mechanischen Beanspruchung der Außenschale die Materialstärke der Außenschale im Vergleich zu einem Rest der Außenschale erhöht ist und/oder zu der Außenschale materialverschiedene Stabilisierungselemente an oder in der Außenschale angeordnet sind.

13. Küchenutensil nach einem der Ansprüche 1 bis 12, **dadurch gekennzeichnet, dass** eine Materialstärke des Außenbodens und/oder des Übergangsbereichs der Außenschale größer als eine Materialstärke der Außenwand ausgebildet ist.

14. Küchenutensil (2) nach einem der Ansprüche 1 bis 13, **dadurch gekennzeichnet, dass** an oder in mindestens einer der mindestens einen Stützstruktur (24) mindestens ein Zusatzbauteil des Küchenutensils (2) angeordnet ist, bevorzugt ein Ferritkörper und/oder ein elektrisches Bauteil aus der nachfolgenden Gruppe: Elektronik (38) zur Steuerung oder Regelung des Küchenutensils (2), Elektronik zur Aufnahme und/oder Verarbeitung und/oder Übermittlung von Messwerten und/oder Daten und/oder Steuer- und/oder Regelparametern, Sensor (40) zur Erfassung eines Küchenutensilparameters des Küchenutensils (2), induktives oder resistives Heizelement zur Erwärmung eines in der Innenschale befindlichen Garguts, Induktionsspule zur Erwärmung eines Heizelements, Induktionsspule (36) zur Energieversorgung einer Elektronik (38) des Küchenutensils (2), Spule oder Antenne zur Signalübertragung zwischen dem Küchenutensil (2) und dem Induktionskochfeld (4) und/oder zwischen dem Küchenutensil und einem weiteren Gerät.

15. Küchenutensil (2) nach einem der Ansprüche 1 bis 14, **dadurch gekennzeichnet, dass** die Außenschale (16) aus einem Material mit einer im Vergleich zu einem ferromagnetischen Material geringeren Leitfähigkeit für Wirbelströme ausgebildet ist.
